# EUROPÄISCHE PATENTSCHRIFT

(11) **EP 3 497 320 B1**
(45) Veröffentlichungstag und Bekanntmachung des Hinweises auf die Patenterteilung: **29.01.2020**
(21) Anmeldenummer: 17730142.1
(22) Anmeldetag: 14.06.2017
(51) Int. Cl.: F03B 3/02, F03B 15/02

(54) **FRANCIS TURBINE UND VERFAHREN ZUM BETRIEB**
FRANCIS TURBINE AND OPERATING METHOD
TURBINE FRANCIS ET PROCÉDÉ POUR SON FONCTIONNEMENT

(30) Priorität: 08.08.2016 DE 102016214649
(43) Veröffentlichungstag der Anmeldung: 19.06.2019
(73) Patentinhaber: Voith Patent GmbH, 89522 Heidenheim (DE)
(72) Erfinder: MENDE, Carsten, 89542 Herbrechtingen (DE); NEIDHARDT, Thomas, 89520 Heidenheim (DE)
(86) Internationale Anmeldenummer: PCT/EP2017/064531
(87) Internationale Veröffentlichungsnummer: WO 2018/028859

(56) Entgegenhaltungen:
- WO-A1-99/43954
- DE-A1- 1 503 278
- US-A- 2 524 304
- US-A- 2 758 815
- US-A1- 2004 066 043

## Beschreibung

Die vorliegende Erfindung betrifft eine Francis Turbine und ein Verfahren zum Betrieb einer solchen.

Die aus dem Stand der Technik bekannten Francis Turbinen werden mittels eines verstellbaren Leitapparates reguliert. Dabei werden Massenstrom und Zuströmwinkel zu den Laufschaufeln der Turbine gleichzeitig geregelt. Eine getrennte Einstellung beider Größen ist nicht möglich. Dadurch ist ein Betrieb abseits des Auslegungspunktes durch Wirkungsgradverluste gekennzeichnet, die aus einer Falscheinströmung der Laufschaufeln bei geändertem Massenstrom resultieren.

In der DE 1 503 278 wird eine doppelt regulierte Francis Turbine für einen Druckhöhenbereich von 50 bis 150 m vorgeschlagen, die die genannten Nachteile überwindet. Die dort vorgeschlagene Lösung besteht darin, dass die wirksame Turbinenhöhe durch eine verstellbare Nabe eingestellt werden kann und zusätzlich der Leitapparat einen verstellbaren oberen Kranz besitzt, welcher simultan mit der Nabe verstellt wird. Dadurch kann der Massenstrom reguliert werden, während mit Hilfe der beweglichen Leitschaufeln des Leitapparates der Zuströmwinkel zu den Laufschaufeln der Turbine unabhängig davon eingestellt wird.

Die Nachteile dieser Lösung bestehen darin, dass sie konstruktiv sehr aufwändig ist und hohe Anforderungen bezüglich der Abdichtung der beweglichen Teile stellt. Damit sind hohe Gestehungskosten verbunden. Außerdem ist diese Lösung auf den Druckhöhenbereich von 50 bis 150 m beschränkt.

Die Erfinder haben sich die Aufgabe gestellt, eine Francis Turbine anzugeben, die abseits des Auslegungspunktes eine höheren Wirkungsgrad besitzt als herkömmliche Francis Turbinen und geringere Gestehungskosten als die aus der DE 1 503 278 bekannte Lösung erfordert und für alle Druckhöhenbereiche einer Francis Turbine geeignet ist.

Erfindungsgemäß wird diese Aufgabe durch eine Turbine mit den Merkmalen des unabhängigen Anspruchs 1 gelöst. Weitere vorteilhafte Ausgestaltungen der erfindungsgemäßen Turbine ergeben sich aus den abhängigen Unteransprüchen. Der unabhängige Verfahrensanspruch beschreibt den Betrieb einer erfindungsgemäßen Turbine.

Die Erfinder haben sich von dem Gedanken leiten lassen, die gattungsgemäße Turbine mit einem zusätzlichen Element auszustatten, welches den Massenstrom (d.h. den Wasserfluss) regeln kann. Das zusätzliche Element soll dabei möglichst einfach aufgebaut sein.

Die erfindungsgemäßen Lösungen werden nachfolgend anhand von Figuren erläutert. Darin ist im Einzelnen folgendes dargestellt:
- Figur 1: Relativer Wirkungsgrad als Funktion der relativen Leistung für eine herkömmliche Francis Turbine;
- Figur 2: Erfindungsgemäßes Element in einer ersten Ausführungsform;
- Figur 3: Erfindungsgemäßes Element in einer zweiten Ausführungsform;
- Figur 4: Erfindungsgemäßes Verfahren zum Betrieb einer erfindungsgemäßen Francis Turbine.

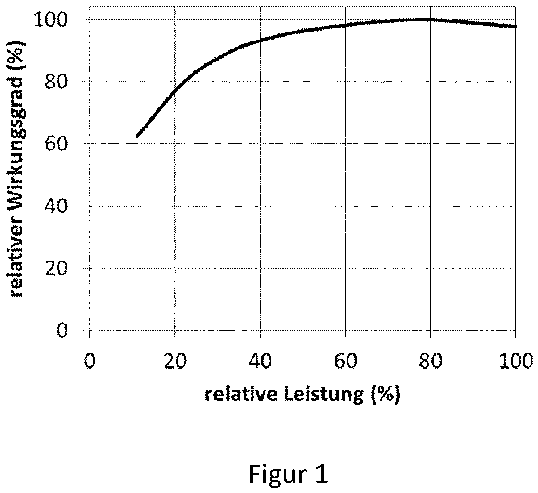

Figur 1 zeigt in einem Diagramm den relativen Wirkungsgrad als Funktion der relativen Leistung für eine herkömmliche Francis Turbine. Bei Volllast ist die relative Leistung 100%. Der Auslegungspunkt liegt bei 78% relativer Leistung. Hier erreicht die Turbine ihren maximalen Wirkungsgrad (100% relativer Wirkungsgrad). Aus dem Kurvenverlauf geht hervor, dass die Turbine im Bereich von 60% - 100% relativer Leistung einen akzeptablen Wirkungsgrad besitzt. Unter 60% relativer Leistung fällt die Kurve zunehmend ab und in diesem Bereich ist der Wirkungsgrad um mehr als 2,5% reduziert. Der Wirkungsgradabfall resultiert aus der bereits oben erwähnten Falscheinströmung der Laufschaufeln.

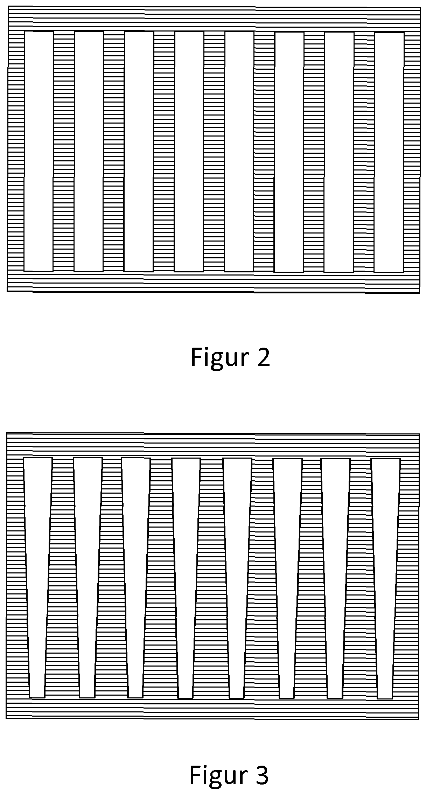

Figur 2 zeigt ein Beispiel eines Elementes zur Regulierung des Wasserflusses. Es besteht aus einem massiven Blech mit einer Perforation, welche aus vertikalen Schlitzen besteht. Dabei ist die gezeigte Perforation nur als ein Beispiel von vielen denkbaren Perforationsarten anzusehen. Alternativ können z.B. homogen verteilte Löcher bzw. Öffnungen vorgesehen sein. Weitere mögliche Perforationsformen und die zugehörige Wirkweise werden im Zusammenhang mit Figur 3 diskutiert. Die Erfinder haben erkannt, dass wenn ein solches Element in Wasserflussrichtung oberhalb der Turbine in den Wasserweg eingebracht wird, der Wasserfluss zunehmend abnimmt, je weiter das Element in den Wasserweg eingebracht wird. Das Element wird dabei in vertikaler Richtung in Bezug auf die Darstellung von Figur 2 ein- und ausgefahren. Durch Ein- und Ausfahren des Elementes in den Wasserweg kann auf diese Weise der Wasserfluss geregelt werden. Den Erfindern ist bewusst, dass das Einbringen des erfindungsgemäßen Elements in den Wasserweg zu hydraulischen Verlusten führt. Das erfindungsgemäße Element wird daher nur in dem Bereich zur Regulierung des Wasserflusses verwendet, in dem die hydraulischen Verluste durch das Element geringer sind als die hydraulischen Verluste durch die Falscheinströmung der Laufschaufeln bei herkömmlicher Betriebsweise (Regelung durch den Leitapparat allein). Die zur Bestimmung dieses Bereiches notwendigen hydraulischen Verluste können am einfachsten durch eine Simulation berechnet, aber im Prinzip auch experimentell bestimmt werden. Es ist klar, dass der Wirkungsgrad der Turbine in diesem Bereich entsprechend dem Differenzbetrag zwischen den jeweiligen hydraulischen Verlusten zunimmt.

Der Ort, an dem das erfindungsgemäße Element in den Wasserweg eingefahren wird, kann unter zwei Aspekten ausgewählt werden: Kosten und hydraulische Gesichtspunkte. Im Hinblick auf die Kosten ist es zweckmäßig, wenn das erfindungsgemäße Element an ohnehin vorgesehene Organe angegliedert wird. Falls ein Kugelschieber oder eine Flügelklappe als Schließorgan vorgesehen ist, so ist es zweckmäßig, dass das erfindungsgemäße Element in der Nähe desselben installiert wird, da so kaum zusätzlicher Raum benötigt wird. Das erfindungsgemäße Element ist in diesem Fall wie ein Schieber aufgebaut, d.h. das Blech ist flach ausgeführt. Falls ein Ringgatter als Schließorgan vorgesehen ist, so ist es zweckmäßig, dass das erfindungsgemäße Element in dasselbe integriert wird. Das Ringgatter ist dann zweistufig ausgeführt mit zwei konzentrischen zylindrischen Hülsen, wobei eine der Hülsen durch das erfindungsgemäße Element gebildet wird und welches daher aus einem perforierten Ringblech besteht. Die beiden Hülsen können gegeneinander verschoben werden. Wenn der Wasserfluss mit dem erfindungsgemäßen Element geregelt wird, so wird nur dasselbe in den Wasserweg geschoben, während die nichtperforierte Hülse außerhalb desselben bleibt.

Im Hinblick auf die hydraulischen Gesichtspunkte ist es vorteilhaft, wenn das erfindungsgemäße Element möglichst weit oberhalb der Turbine in den Wasserweg geschoben wird, da sich so der durch das erfindungsgemäße Element gestörte Wasserfluss besser homogenisieren kann bevor er in die Turbine einmündet. Außerdem ist der Wasserfluss weiter oberhalb der Turbine in der Regel langsamer wodurch die hydraulischen Verluste durch das erfindungsgemäße Element geringer ausfallen. Dadurch ist der Bereich größer, in dem das erfindungsgemäße Element eingesetzt werden kann. Im Hinblick auf die hydraulischen Gesichtspunkte ist also der Einsatz in der Nähe eines Kugelschiebers bzw. einer Flügelklappe günstiger als der Einsatz in einem Ringgatter, da erstere weiter oberhalb im Wasserweg angeordnet sind.

Figur 3 zeigt ein erfindungsgemäßes Element in einer zweiten Ausführungsform. Die Perforation in Figur 3 besteht in Schlitzen, welche sich nach unten zu hinsichtlich ihrer Breite verjüngen. Dabei wird das erfindungsgemäße Element aus Figur 3 mit dem unteren Rand voraus in den Wasserweg eingefahren. Diese Formgebung der Perforation trägt einem weiteren Aspekt Rechnung: Es ist von Vorteil für die Regelung des Wasserflusses, wenn das Regelorgan eine möglichst lineare Kennlinie aufweist. Die Kennlinie des erfindungsgemäßen Elements aus Figur 3 ist linearer als die Kennlinie des Elements aus Figur 2. Das kann dadurch erklärt werden, dass beim Einfahren des Elements zunächst der Wasserfluss weniger stark reduziert wird, da dem Wasser sozusagen noch genug Raum zum Ausweichen bleibt. Daher ist es für die Linearität günstiger, wenn das Element, an dem Rand der zuerst in den Wasserweg eingeführt wird, weniger stark perforiert ist, d.h. sozusagen mehr "schließende Fläche" aufweist. In Figur 3 wird das beschriebene Verhalten durch die nach unten verlaufende Verjüngung der Schlitze erzielt. Genauso gut kann dieses Verhalten durch eine inhomogene Verteilung von kreisförmigen (oder anders geformten) Öffnungen erzielt werden. Es kann auch genauso gut die Größe von gleichmäßig verteilten Öffnungen variiert werden.

Wird ein Schieber in der Nähe eines Kugelschiebers bzw. einer Flügelklappe verwendet, so ergibt sich folgende Situation. Der Schieber wird in den Wasserweg eingeschoben, welcher an dieser Stelle in der Regel einen kreisförmigen Querschnitt aufweist. Bei einem Kreisquerschnitt wird je % Hub des Schiebers eine unterschiedliche Fläche abgedeckt. Innerhalb der ersten 50% Hub (also bis zur Achse des Querschnitts des Wasserweges) ist die Drosselwirkung üblicherweise geringer und damit die Auswirkung auf die Kennlinie. Bei großen Hüben (fast geschlossene Stellung) ist die Änderung der Fläche vom Hub aber stark nichtlinear. Diesem Verhalten kann durch eine geeignet gewählte Perforation entgegengewirkt werden.

Ist das erfindungsgemäße Element in ein Ringgatter integriert, so ergibt sich folgende Situation. Im Ringgatter ergibt sich eine relevante Drosselwirkung erst bei großen Hüben desselben. Dann ist die Flächenänderung des noch frei durchströmten Bereichs linear zum Hub des Ringgatters. Trotzdem kann durch eine geeignete ungleichmäßige Perforation die Linearität insgesamt verbessert werden.

Im Grunde ist die optimale Ausgestaltung der Perforation des erfindungsgemäßen Elements durch den mit der Auslegung betrauten Fachmann durch eine Optimierungsaufgabe zu lösen, bei der die Linearität als zu maximierende Größe und die hydraulischen Verluste als zu minimierende Größe eingehen, und als Nebenbedingungen die strukturelle Festigkeit und die Herstellungskosten berücksichtig werden. Das Blech aus dem das Element gefertigt wird muss dabei eine für die strukturelle Festigkeit hinreichende Dicke aufweisen.

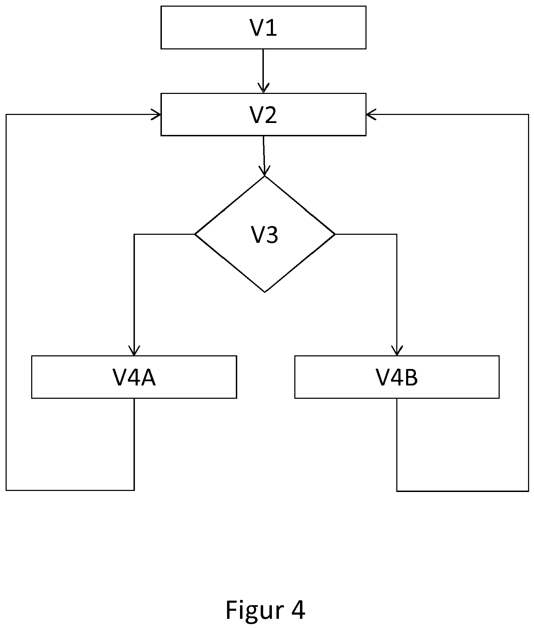

Figur 4 zeigt das Ablaufschema des erfindungsgemäßen Verfahrens zum Betrieb einer erfindungsgemäßen Francis Turbine. Der mit V1 bezeichnete Verfahrensschritt besteht in der Bestimmung der hydraulischen Verluste der beiden Regelungsmethoden jeweils in Abhängigkeit der relativen Leistung der Turbine: Bei herkömmlicher Regelung mit dem Leitapparat allein und bei Regelung des Wasserflusses mit dem erfindungsgemäßen Element und damit verbundener Verwendung des Leitapparates zur Einstellung der Anströmwinkel. Aus den jeweiligen hydraulischen Verlusten kann bestimmt werden, bei welcher relativen Leistung welche Regelungsmethode günstiger ist, d.h. zu einem besseren Gesamtwirkungsgrad führt. Der Schritt V1 wird nur einmal bei Auslegung bzw. bei der Inbetriebnahme der Turbine ausgeführt. Die genannten Ergebnisse werden im Regelungsalgorithmus hinterlegt. Mit dem mit V2 bezeichneten Verfahrensschritt beginnt das eigentliche Verfahren, das beim Betrieb der Turbine immer wieder durchlaufen wird. In V2 wird die relative Leistung festgelegt, mit welcher die Turbine jeweils betrieben werden soll. Anhand dieser Leistung und den in V1 bestimmten Größen wird im mit V3 bezeichneten Verfahrensschritt die Art der zu verwendenden Regelung ausgewählt. Je nach Ergebnis wird die gewählte Regelung ausgeführt, welche in den mit V4A und V4B bezeichneten Verfahrensschritten ausgeführt werden. Dabei sei mit V4A die herkömmliche Regelungsweise mit dem Leitapparat alleine bezeichnet. In diesem Fall befindet sich das erfindungsgemäße Element nicht im Wasserweg. Im mit V4B zeichneten Fall wird das erfindungsgemäße Element in den Wasserweg eingefahren und regelt den Wasserfluss. Der Leitapparat wird zum Einstellen des Anströmwinkels verwendet. Soll eine andere relative Leistung eingestellt werden, dann werden die Schritte V2, V3 und V4A bzw. V4B erneut durchlaufen.

Aus dem Gesagten wird klar, dass die erfindungsgemäße Lösung nicht auf einen bestimmten Druckhöhenbereich beschränkt ist. Ferner ist klar, dass die erfindungsgemäße Lösung nur für relative Leistungen genutzt werden kann, die unterhalb des Auslegungspunktes liegen. Wie aus Figur 1 hervorgeht, ist der relative Wirkungsgrad für Leistungen oberhalb des Auslegungspunktes noch akzeptabel hoch, so dass aus der im vorherigen Satz angesprochenen Beschränkung kein Nachteil entsteht.

## Patentansprüche

1. Verfahren zum Betrieb einer Francis Turbine umfassend einen Wasserweg, ein im Wasserweg angeordnetes Laufrad, einen im Wasserweg angeordneten Leitapparat und ein zusätzliches Element zur Einstellung des Wasserflusses durch die Turbine, wobei das Element in Wasserflussrichtung oberhalb des Laufrades im Wasserweg angeordnet ist, wobei das zusätzliche Element ein perforiertes Blech umfasst, welches in den Wasserweg eingefahren werden kann, und wobei das Verfahren folgende Schritte umfasst: Bestimmung der hydraulischen Verluste in Abhängigkeit von der relativen Leistung der Turbine jeweils für die Regelung mit dem Leitapparat allein und für die Regelung mit dem zusätzlichen Element in Verbindung mit dem Leitapparat (V1); Festlegung der relativen Leistung, mit der die Turbine betrieben werden soll (V2); Wahl einer der beiden Regelungen anhand der zugehörigen hydraulischen Verluste und der festgelegten relativen Leistung (V3); Anwendung der ausgewählten Regelung (V4A oder V4B), wobei die eine Regelung (V4A) in der Regelung mit dem Leitapparat allein und die andere Regelung (V4B) in der Regelung mit dem zusätzlichen Element in Verbindung mit dem Leitapparat besteht, wobei mit dem zusätzlichen Element der Wasserfluss durch die Turbine und mit dem Leitapparat der Anströmwinkel der Turbine eingestellt wird; wobei der erstgenannte Verfahrensschritt (V1) nur einmal bei der Auslegung bzw. der Inbetriebnahme der Turbine ausgeführt wird, und die restlichen Schritte (V2, V3, V4A und V4B) in der genannten Reichenfolge iterierend durchlaufen werden.

2. Francis Turbine zur Ausführung des Verfahrens gemäß Anspruch 1 umfassend einen Wasserweg, ein im Wasserweg angeordnetes Laufrad, einen im Wasserweg angeordneten Leitapparat und ein zusätzliches Element zur Einstellung des Wasserflusses durch die Turbine, wobei das Element in Wasserflussrichtung oberhalb des Laufrades im Wasserweg angeordnet ist, wobei das zusätzliche Element ein perforiertes Blech umfasst, welches in den Wasserweg eingefahren werden kann, wobei die Perforation des Elements Schlitze umfasst und die Schlitze sich zu einem ihrer Enden hin verjüngen und so auf dem Blech angeordnet sind, dass das Ende der Schlitze mit geringerer Breite in Richtung des Endes des Bleches weist, welches dafür vorgesehen ist, beim Einfahren zuerst in den Wasserweg einzufahren.

3. Francis Turbine zur Ausführung des Verfahrens gemäß Anspruch 1 umfassend einen Wasserweg, ein im Wasserweg angeordnetes Laufrad, einen im Wasserweg angeordneten Leitapparat und ein zusätzliches Element zur Einstellung des Wasserflusses durch die Turbine, wobei das Element in Wasserflussrichtung oberhalb des Laufrades im Wasserweg angeordnet ist, wobei das zusätzliche Element ein perforiertes Blech umfasst, welches in den Wasserweg eingefahren werden kann, wobei die Perforation des Elements runde Öffnungen umfasst und die Öffnungen auf dem Blech homogen angeordnet sind und unterschiedliche Größen aufweisen, und die Größe der Öffnungen an dem Ende des Blechs geringer ist, welches dafür vorgesehen ist, beim Einfahren zuerst in den Wasserweg einzufahren.

4. Francis Turbine zur Ausführung des Verfahrens gemäß Anspruch 1 umfassend einen Wasserweg, ein im Wasserweg angeordnetes Laufrad, einen im Wasserweg angeordneten Leitapparat und ein zusätzliches Element zur Einstellung des Wasserflusses durch die Turbine, wobei das Element in Wasserflussrichtung oberhalb des Laufrades im Wasserweg angeordnet ist, wobei das zusätzliche Element ein perforiertes Blech umfasst, welches in den Wasserweg eingefahren werden kann, wobei die Perforation des Elements runde Öffnungen umfasst und die Öffnungen alle dieselbe Größe aufweisen und auf dem Blech nicht homogen angeordnet sind, und die Dichte der Öffnungen an dem Ende des Blechs geringer ist, welches dafür vorgesehen ist, beim Einfahren zuerst in den Wasserweg einzufahren.

5. Francis Turbine nach einem der Ansprüche 2 bis 4, wobei das perforierte Blech flach ausgebildet ist, und das Element als Schieber ausgebildet ist.

6. Francis Turbine nach einem der Ansprüche 2 bis 4, wobei das perforierte Blech als Ringblech ausgebildet ist, und das Element in ein Ringgatter integriert ist, wobei das Blech konzentrisch zum Schließzylinder des Ringgatters angeordnet ist.

## Claims

1. Method for operating a Francis turbine comprising a water path, a runner arranged in the water path, a guide apparatus arranged in the water path, and an additional element for setting the water flow through the turbine, wherein the element is arranged in the water path above the runner in the water flow direction, wherein the additional element comprises a perforated plate which can be moved into the water path, and wherein the method comprises the following steps: determining the hydraulic losses in dependence on the relative power of the turbine, in each case for control with the guide apparatus alone and for control with the additional element in combination with the guide apparatus (V1); fixing the relative power at which the turbine is to be operated (V2); selecting one of the two controls on the basis of the associated hydraulic losses and the fixed relative power (V3); applying the selected control (V4A or V4B), wherein one control (V4A) is the control with the guide apparatus alone, and the other control (V4B) is the control with the additional element in combination with the guide apparatus, wherein the water flow through the turbine is set by the additional element and the incident flow angle of the turbine is set by the guide apparatus; wherein the first-stated method step (V1) is executed only once during the construction or start-up of the turbine, and the remaining steps (V2, V3, V4A and V4B) are run through iteratively in the stated sequence.

2. Francis turbine for executing the method according to Claim 1, comprising a water path, a runner arranged in the water path, a guide apparatus arranged in the water path, and an additional element for setting the water flow through the turbine, wherein the element is arranged in the water path above the runner in the water flow direction, wherein the additional element comprises a perforated plate which can be moved into the water path, wherein the perforation of the element comprises slots, and the slots taper towards one of their ends and are arranged on the plate such that that end of the slots having a smaller width points in the direction of that end of the plate which is intended to be moved into the water path first during the moving-in.

3. Francis turbine for executing the method according to Claim 1, comprising a water path, a runner arranged in the water path, a guide apparatus arranged in the water path, and an additional element for setting the water flow through the turbine, wherein the element is arranged in the water path above the runner in the water flow direction, wherein the additional element comprises a perforated plate which can be moved into the water path, wherein the perforation of the element comprises round openings, and the openings are arranged homogeneously on the plate and have different sizes, and the size of the openings is smaller at that end of the plate which is intended to be moved into the water path first during the moving-in.

4. Francis turbine for executing the method according to Claim 1, comprising a water path, a runner arranged in the water path, a guide apparatus arranged in the water path, and an additional element for setting the water flow through the turbine, wherein the element is arranged in the water path above the runner in the water flow direction, wherein the additional element comprises a perforated plate which can be moved into the water path, wherein the perforation of the element comprises round openings, and the openings all have the same size and are arranged inhomogeneously on the plate, and the concentration of the openings is lower at that end of the plate which is intended to be moved into the water path first during the moving-in.

5. Francis turbine according to one of Claims 2 to 4, wherein the perforated plate is of planar form, and the element is in the form of a slide.

6. Francis turbine according to one of Claims 2 to 4, wherein the perforated plate is in the form of a ring plate, and the element is integrated into a ring gate, wherein the plate is arranged concentrically with respect to the closure cylinder of the ring gate.

## Revendications

1. Procédé pour le fonctionnement d'une turbine Francis, comprenant une voie d'eau, une roue mobile disposée dans la voie d'eau, un appareil directeur disposé dans la voie d'eau et un élément supplémentaire pour ajuster le flux d'eau à travers la turbine, l'élément étant disposé dans la direction du flux d'eau au-dessus de la roue mobile dans la voie d'eau, l'élément supplémentaire comprenant une tôle perforée qui peut être introduite dans la voie d'eau, et le procédé comprenant les étapes suivantes : détermination des pertes hydrauliques en fonction de la puissance relative de la turbine, à chaque fois pour un réglage uniquement avec l'appareil directeur et pour un réglage avec l'élément supplémentaire en association avec l'appareil directeur (V1) ; établissement de la puissance relative à laquelle la turbine doit fonctionner (V2) ; sélection de l'un des deux réglages à l'aide des pertes hydrauliques associées et de la puissance relative établie (V3) ; application du réglage sélectionné (V4A ou V4B), l'un des réglages (V4A) consistant en le réglage avec l'appareil directeur uniquement et l'autre réglage (V4B) consistant en le réglage avec l'élément supplémentaire en association avec l'appareil directeur, le flux d'eau à travers la turbine étant ajusté avec l'élément supplémentaire et l'angle d'afflux de la turbine étant ajusté avec l'appareil directeur ; l'étape de procédé mentionnée en premier (V1) étant effectuée seulement une fois lors de la conception ou de la mise en service de la turbine, et les étapes restantes (V2, V3, V4A et V4B) étant réalisées de manière itérative dans la séquence mentionnée.

2. Turbine Francis pour la mise en œuvre du procédé selon la revendication 1, comprenant une voie d'eau, une roue mobile disposée dans la voie d'eau, un appareil directeur disposé dans la voie d'eau et un élément supplémentaire pour ajuster le flux d'eau à travers la turbine, l'élément étant disposé dans la direction du flux d'eau au-dessus de la roue mobile dans la voie d'eau, l'élément supplémentaire comprenant une tôle perforée qui peut être introduite dans la voie d'eau, les perforations de l'élément comprenant des fentes et les fentes se rétrécissant vers l'une de ses extrémités et étant disposées sur la tôle de telle sorte que l'extrémité des fentes de plus petite largeur soit tournée dans la direction de l'extrémité de la tôle qui est prévue pour entrer en premier dans la voie d'eau lors de son introduction.

3. Turbine Francis pour la mise en œuvre du procédé selon la revendication 1, comprenant une voie d'eau, une roue mobile disposée dans la voie d'eau, un appareil directeur disposé dans la voie d'eau et un élément supplémentaire pour ajuster le flux d'eau à travers la turbine, l'élément étant disposé dans la direction du flux d'eau au-dessus de la roue mobile dans la voie d'eau, l'élément supplémentaire comprenant une tôle perforée qui peut être introduite dans la voie d'eau, les perforations de l'élément comprenant des ouvertures rondes et les ouvertures étant disposées de manière homogène sur la tôle et présentant des tailles différentes et la taille des ouvertures étant plus petite à l'extrémité de la tôle qui est prévue pour entrer en premier dans la voie d'eau lors de son introduction.

4. Turbine Francis pour la mise en œuvre du procédé selon la revendication 1, comprenant une voie d'eau, une roue mobile disposée dans la voie d'eau, un appareil directeur disposé dans la voie d'eau et un élément supplémentaire pour ajuster le flux d'eau à travers la turbine, l'élément étant disposé dans la direction du flux d'eau au-dessus de la roue mobile dans la voie d'eau, l'élément supplémentaire comprenant une tôle perforée qui peut être introduite dans la voie d'eau, la perforation de l'élément comprenant des ouvertures rondes et les ouvertures présentant toutes la même taille et n'étant pas disposées de manière homogène sur la tôle et la densité des ouvertures étant plus faible à l'extrémité de la tôle qui est prévue pour entrer en premier dans la voie d'eau lors de son introduction.

5. Turbine Francis selon l'une quelconque des revendications 2 à 4, dans laquelle la tôle perforée est réalisée sous forme plate et l'élément est réalisé sous forme de coulisseau.

6. Turbine Francis selon l'une quelconque des revendications 2 à 4, dans laquelle la tôle perforée est réalisée sous forme de tôle annulaire et l'élément est intégré dans une vanne-fourreau, la tôle étant disposée concentriquement par rapport au cylindre de fermeture de la vanne-fourreau.
